# EUROPÄISCHE PATENTSCHRIFT

(11) **EP 1 813 659 B1**
(45) Veröffentlichungstag und Bekanntmachung des Hinweises auf die Patenterteilung: **23.03.2016**
(21) Anmeldenummer: 07100366.9
(22) Anmeldetag: 11.01.2007
(51) Int. Cl.: C09J 7/02

(54) **Verwendung eines Weiterreißfesten Klebebands**
Use of a tear resistant adhesive film tape
Utilisation d'un ruban de film adhésif résistant à la rupture

(30) Priorität: 25.01.2006 DE 102006003756
(43) Veröffentlichungstag der Anmeldung: 01.08.2007
(73) Patentinhaber: tesa SE, 22848 Norderstedt (DE)
(72) Erfinder: Rodewald, Ilse, 22527, Hamburg (DE); Yun, Petra, 20251, Hamburg (DE); Heck, Thomas, Charlotte, NC 28210 (US)

(56) Entgegenhaltungen:
- EP-A- 1 775 331
- EP-A1- 1 785 461
- WO-A-01/12744
- WO-A-2004/058590
- WO-A-2004/078869

## Beschreibung

Die Erfindung betrifft die Verwendung eines Klebebands mit einem Trägermaterial, auf das zumindest einseitig eine Klebemasse aufgebracht ist, wobei das Trägermaterial aus einer Folie besteht, als Verstärkungsband auf Papier, Well- oder Vollpappe.
Die Weiterreißfestigkeit von Klebebändern stellt ein Problem dar, an dessen Lösung stets gearbeitet wird.
Bekannt ist, dass Folien, die zum Erreichen einer hohen Längszugfestigkeit monoaxial verstreckt werden, üblicherweise den Nachteil einer drastisch verringerten Weiterreißfestigkeit haben.
Lösungen zur Erhöhung der Weiterreißfestigkeit von Klebebändern beruhen auf verschiedenen Ansätzen, zum Beispiel auf der Faserverstärkung des Trägermaterials. Üblich sind so genannte ,;Filament"-Klebebänder mit unidirektionalen Längs-Gelegen oder bidirektionalen Geweben oder Gelegen, die aus gezwirnten oder getengelten Garnen bestehen. Diese Garne können zum Beispiel aus künstlichen Endlosfasern, aber auch aus Naturfasern bestehen. Die Fasern dieser Art von Klebebändern sind oftmals zu örtlich fixierten Faser- oder Filamentbündeln zusammengehalten.
Die so eingebrachten Fasern können zusätzlich zur Aufgabe der Erhöhung der Weiterreißfestigkeit einen variablen Anteil der Zugfestigkeit übernehmen.
Eine andere Lösung stellt zum Beispiel eine gereckte Folie aus mindestens zwei coextrudierten Schichten unterschiedlicher Zusammensetzung mit einer unregelmäßigen inneren Struktur dar, wie sie in DE 199 55 610 A1 dargelegt ist. Die Dicke einer dieser Schichten variiert hier umgekehrt proportional zu der zweiten Schicht über die Breite des Klebebandes, die Gesamtdicke ist konstant. Ein in Querrichtung beginnender Riss wird durch die unterschiedlichen mechanischen Eigenschaften der Schichten in Längsrichtung umgelenkt. Ein augenfälliger Nachteil der hier offenbarten Ausführungsform ist jedoch die aufwändige maschinentechnische Ausstattung, die zur Herstellung dieses Folientyps erforderlich ist.
Eine weitere Möglichkeit, die Weiterreißfestigkeit zu erhöhen, ist zum Beispiel eine verstärkende Rippenstruktur, wie sie in EP 0 411 830 A1, EP 0 343 896 A1, US 5,145,544 A und US 5,173,141 A offenbart ist. Auch diese Variante weist verschiedene Nachteile auf, die bereits hinlänglich in der DE 199 55 610 A1 dargelegt sind.

Die WO 2004/058590 A1 beschreibt ein Klebeband, dessen Träger zumindest eine Schwächungslinie aufweist. Das Klebeband wird zum Befestigen eines Gegenstands auf einem anderen verwendet, wobei beim Lösen des zweiten Gegenstands das Klebeband an der oder den Schwächungslinien aufreißt.
Eine Verwendung als Verstärkungsband wird nicht erwähnt.

Die WO 2004/078869 A1 offenbart ein Klebeband mit einem Trägermaterial, das Perforationen aufweist, die vollständig durch das Trägermaterial durchgehen. Der Perforationen dienen zur Verbesserung der Handeinreißbarkeit des Klebebands.
Eine Verwendung als Verstärkungsband wird nicht erwähnt.

Die WO 01/12744 A1 zeigt wie die D2 ein Klebeband mit einem Trägermaterial, das Perforationen aufweist, die vollständig durch das Trägermaterial durchgehen. Der Perforationen dienen zur Verbesserung der Handeinreißbarkeit des Klebebands.
Eine Verwendung als Verstärkungsband wird nicht erwähnt.

Aufgabe der Erfindung ist es, ein Klebeband als Verstärkungsband auf Papier, Well- oder Vollpappe zur Verfügung zu stellen, das eine in Querrichtung (cross direction, cd) sehr hohe Weiterreißfestigkeit und eine in Längsrichtung (machine direction, md) sehr hohe Zugfestigkeit aufweist.

Gelöst wird diese Aufgabe durch die Verwendung eines Klebebands, wie sie in Anspruch 1 dargelegt ist. Gegenstand der Unteransprüche sind dabei Weiterbildungen der erfindungsgemäßen Verwendung.

Demgemäß betrifft die Erfindung die Verwendung eines Klebebands mit einem Trägermaterial, auf das zumindest einseitig eine Klebemasse, insbesondere Haftklebemasse aufgebracht ist, wobei das Trägermaterial aus einer Folie besteht, die mindestens einen sich in der Längsrichtung des Klebebands erstreckenden Ritz aufweist, der Ritz auf der Oberfläche des Trägermaterials beginnt, auf die die Klebemasse aufgetragen ist, so dass die freiliegende Oberfläche des Trägermaterials unbeschädigt ist, so dass mindestens eine weitere Kante innerhalb der Folie zusätzlich zu den beiden Seitenkanten erzeugt wird, als Verstärkungsband auf Papier, Well- oder Vollpappe, vorzugsweise an exponierten Stellen wie Eingriffen, Henkeln und Auslässen.

In einer ersten bevorzugten Ausführungsform der Erfindung erstreckt sich der Ritz über zumindest ein Fünftel der gesamten Dicke des Trägermaterials erstreckt.

Der Ritz (beziehungsweise, falls mehrere vorhanden sind, die Ritze) können als durchgängige oder als unterbrochene Linie, letztere bevorzugt in regelmäßigen Abständen unterbrochen, ausgeführt sein.
Selbstverständlich ist auch jede beliebige Mischung von Ritzungen und Schlitzungen in der Folie möglich.
In der Folie können dann abwechselnd in beliebiger Anordnung Ritze und Schlitze vorhanden sein.

Die Folie wird nach mechanischen Eigenschaften wie Zugfestigkeit, Steifigkeit und weiteren ausgewählt.
Als Material für die Folie können alle dem Fachmann bekannten Folienmaterialien verwendet werden.
Bevorzugt sind beispielsweise BOPP, MOPP, PP, PE, PET, PA, PU, PVC oder Polyester. Allgemein können Polyolefine, Copolymere aus Ethylen und polaren Monomeren wie Styrol, Vinylacetat, Methylmethacrylat, Butylacrylat oder Acrylsäure, Homopolymere wie HDPE, LDPE, MDPE oder Copolymere aus Ethylen und einem weiteren Olefin wie Propen, Buten, Hexen oder Octen (zum Beispiel LLDPE, VLLDE) oder Polypropylene wie zum Beispiel Polypropylen-Homopolymere, Polypropylen-Random-Copolymere oder Polypropylen-Block-Copolymere) eingesetzt werden.
Besonders bevorzugt werden jedoch steifere und zugfeste Träger wie PET, MOPP, H-PVC.

Die Foliendicken können vorteilhaft von 5 bis 50 µm reichen. Auch stärkere Dicken können zum Einsatz kommen.
Die Folie kann des Weiteren als Schutz gegen Chemikalien oder als Barrierefolie dienen, indem zum Beispiel eine metallische Schicht aufgebracht wird. Sie kann durch Einarbeitung von UV-Absorbern den UV-Schutz der Klebmasse gewährleisten. Sie kann die optischen Eigenschaften wie Glanz oder Farbe bestimmen, indem beispielsweise eine gefärbte Folie eingesetzt wird.

Wird das Klebeband, das über mindestens einen Ritz verfügt, an einer der beiden Seitenkanten verletzt, so setzt sich der resultierende Riss nur solange quer zur Maschinenrichtung fort, bis er auf diesen Ritz trifft. Dort wird der Riss in Längsrichtung zum Klebeband abgelenkt. Der Träger wird durch das Ritzen also in Längsrichtung fraktioniert, wobei das Ende einer Fraktion durch einen Ritz als Rissstopp oder eine Seitenkante des Klebebands markiert wird.
Diese Fraktionen werden im Folgenden Streifen genannt.

In einer bevorzugten Ausführungsform des Trägermaterials werden in den Träger zwei Randstreifen geritzt. Die Breite der Randstreifen beträgt maximal ein Drittel der gesamten Klebebandbreite. Die Randstreifen bieten Schutz vor im Vorfeld kalkulierbarer Seitenkantenverletzung mit einer maximalen Eindringtiefe.

Die Streifen können unterschiedliche Breiten aufweisen. Insbesondere bevorzugt ist es aber, wenn alle Streifen die gleiche Breite aufweisen. Dabei kann sich herstellungsbedingt eine abweichende Breite der beiden außenliegenden Streifen ergeben.
Um durch die Streifen zusätzliche innere Kanten zu schaffen, sind zumindest zwei Ritze vorgesehen. Die Ritzkante kann dann mittig angeordnet sein, so dass die beiden Streifen gleich breit sind. Es können aber auch "unsymmetrische" Folien hergestellt werden, bei denen der eine Streifen breiter ist als der zweite Streifen und insbesondere die Weitereinreißbarkeit von der Seite des schmaleren Streifens her reduziert wird.

Die Zahl der Streifen lässt sich im Prinzip beliebig erhöhen, wobei durch die Breite des Klebebandes und die Streifenbreite die Obergrenze der Streifenzahl bedingt wird. So lassen sich beispielsweise auch symmetrische oder unsymmetrische Ritzfolien mit drei Streifen herstellen, beispielsweise solche, bei denen in der Nähe der Klebebandkanten jeweils eine innere Kante als Rissgrenze vorgesehen ist.

Die Breite der Streifen liegt besonders bevorzugt zwischen 1 und 4 mm, sehr bevorzugt bei etwa 2 mm. Insbesondere bei Streifen, die eine geringe Breite im Verhältnis zur Breite des Klebebandes aufweisen, ist eine gleiche Streifenbreite von Vorteil.

Bevorzugt werden Ausführungsformen, bei denen ein Ritz über die Breite des Klebebands vorhanden ist. Weiterhin haben sich zwei Ritze als vorteilhaft erwiesen, die vorzugsweise symmetrisch angeordnet sind, und zwar so dass von diesen jeweils einer nahe an einer der beiden Seitenkanten des Trägermaterials angeordnet ist. So ist ein Klebeband bei einer Breite von 15 mm, in dem eine Folie mit insgesamt drei Streifen vorhanden ist, die von links nach rechts eine Breite von 4/7/4 mm haben, besonders vorteilhaft. Bei einer Breite von 19 mm ist vorzugsweise eine Anordnung 4/11/4 zu wählen.

Auf diese Weise lassen sich Klebebänder erzeugen, die in ihrer Dicke deutlich unter Klebebändern des Standes der Technik für entsprechende Einsatzgebiete liegen. So lassen sich Klebebänder mit einer Dicke von insbesondere 50 bis 150 µm erzeugen, besonders bevorzugt von unter 100 µm, ganz besonders bevorzugt von unter 80 µm erzeugen, und das überraschend bei vergleichbarer Rissfestigkeit.
Die Festigkeit des Trägermaterials beträgt vorzugsweise mindestens 250 N/mm², insbesondere 300 N/mm².
Das Klebeband weist eine erhebliche Zugfestigkeit sowie Weiterreißfestigkeit in Querrichtung auf. Darüber hinaus ist es nur geringfügig dehnbar, und das alles bei einer sehr geringen Dicke.

Der geritzte Träger kann mit einer Release-Schicht ausgerüstet werden, durch die die Oberflächeneigenschaften wie Friktion oder Releasewirkung bei einseitig klebmassebeschichteten Klebebändern entscheidend beeinflusst werden können.

Die Klebemasse der erfindungsgemäßen Klebebänder kann eine (Selbst-)Klebemasse sein, die aus der Gruppe der Naturkautschuke oder der Synthesekautschuke oder aus einem beliebigen Blend aus Naturkautschuken und/oder Synthesekautschuken besteht, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.
Stellvertretend genannt seien an dieser Stelle vor allem die besonders verträglichen Styrol-Isopren-Styrol (SIS)- und Styrol-Butadien-Styrol (SBS)-Typen.

Daneben hat sich ein 100%-System auf Styrol-Isopren-Styrol (SIS) als geeignet erwiesen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Eine Vernetzung ist vorteilhaft für die Verbesserung der Wiederabziehbarkeit des Klebebandes nach der Anwendung und kann thermisch oder durch Bestrahlung mit UV-Licht oder Elektronenstrahlen erfolgen.
Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.
Die Vernetzer werden vorzugsweise aktiviert bei Temperaturen über 50°C, insbesondere bei Temperaturen von 100°C bis 160 °C, ganz besonders bevorzugt bei Temperaturen von 110°C bis 140 °C.
Die thermische Anregung der Vernetzer kann auch durch IR-Strahlen oder hochenergetische Wechselfelder erfolgen.

Geeignet ist eine Klebemasse auf Acrylathotmelt-Basis, auf Lösemittelbasis oder auf wässriger Basis, wobei erstere einen K-Wert von mindestens 20 aufweisen kann, insbesondere größer 30, erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungsextruder bevorzugt.
Eine derartige Klebemasse ist in der DE 43 13 008 A1 dargelegt, auf deren Inhalt hiermit Bezug genommen wird und deren Inhalt Teil dieser Offenbarung und Erfindung wird.
Die Klebemasse auf Acrylathotmelt-Basis kann aber auch chemisch vernetzt sein.

In einer weiteren Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Eine Klebemasse, die sich als besonders geeignet zeigt, ist eine niedermolekulare Acrylatschmelzhaftklebemasse, wie sie unter der Bezeichnung acResin UV oder Acronal ®, insbesondere Acronal ® DS3458, von der BASF geführt wird. Diese Klebemasse mit niedrigem K-Wert erhält ihre anwendungsgerechten Eigenschaften durch eine abschließende strahlenchemisch ausgelöste Vernetzung.

Abschließend sei erwähnt, dass auch auf Polyurethan basierende Kleber geeignet sind.

Besonders vorteilhaft lässt sich ein einseitig klebend ausgerüstetes Klebeband verwenden, wobei der Auftrag an Klebemasse vorzugsweise zwischen 15 bis 60 g/m², weiter vorzugsweise zwischen 20 bis 30 g/m² liegt.

Schließlich kann das Klebeband ein Abdeckmaterial aufweisen, mit dem bis zum Gebrauch die eine oder die zwei Klebemasseschichten eingedeckt sind. Als Abdeckmaterialien eignen sich auch alle oben ausführlich aufgeführten Materialien.
Bevorzugt wird aber ein nicht-fusselndes Material eingesetzt wie eine Kunststofffolie oder ein gut verleimtes, langfaseriges Papier.

Das Ritzen der Folie kann an verschiedenen Punkten des Herstellungsprozesses erfolgen. Der Träger kann vor oder nach der Klebmassebeschichtung angeritzt werden. Hierzu können alle handelsüblichen Schneid-, Schlitz- oder Stanzverfahren benutzt werden, die die benötigte Präzision für das Anritzen mitbringen und/oder für das Einbringen von Ritzen in derart geringem Abstand geeignet sind.
Beispielsweise kann hierzu nach der Klebmassebeschichtung das Verfahren des rotativen Stanzens verwendet werden. In diesem Fall wird ein Klebeband mit den oben genannten Eigenschaften hergestellt und durch rotatives Stanzen sowohl angeritzt als auch gleichzeitig konfektioniert. Das Klebeband wird, mit der Klebmasseseite nach oben, in entsprechender Arbeitsbreite der Stanzwelle unter eben dieser vorbeigeführt. Dabei werden verschieden tiefe Schlitze in die Matrix längs der Maschinenrichtung eingebracht. Einige der Schlitze teilen das Material, anderen dagegen ritzen es nur an. Auf diese Weise wird das entsprechende Klebeband auf die gewünschte Breite heruntergeschnitten, und gleichzeitig wird, durch die Klebmasse hindurch, das Trägermaterial angeritzt. Das rotative Stanzen ist dabei derart präzise, dass das Trägermaterial genau definiert eingeritzt wird. Dieses Verfahren erlaubt die genaue Positionierung der Ritzungen zu den Seitenkanten des Tapes, unter Beachtung von in der Anwendung eingeplanten Seitenkantenbeschädigungen des Klebebandes.
Eine weitere Möglichkeit stellt das rotative Stanzen vor der Klebmassebeschichtung dar. In diesem Fall wir das Trägermaterial an einer oder einer Kombination mehrerer Stanzwellen vorbeigeführt. Auf diese Weise wird der Rohträger in gleichmäßigen Abständen angeritzt. Im Weiteren kann dieser Träger wie jeder andere Folienträger weiterverarbeitet werden und zum Schluss genauso auch konfektioniert werden.

Die klassischen Anwendungen von weiterreißfesten Klebebändern umfassen zum Beispiel Bündeln, Verpacken, Palettisieren oder Einsatz ähnlich eines Spanngurtes und sind in der US 2,750,315 A eingehend beschrieben. Deren Gemeinsamkeit ist die Fixierung eines oder mehrerer Gegenstände an sich selbst, aneinander oder an weiteren Objekten. Neben den oben genannten Anwendungen ist das Klebeband hervorragend geeignet für alle Aufgaben, bei denen eine verstärkende Wirkung lasttragender Elemente in Kombination oder wahlweise einzeln mit Ein- und Weiterreißfestigkeit benötigt wird. Verstärkt werden können zum Beispiel Materialien wie Papier, Well- oder Vollpappe vorzugsweise an exponierten Stellen wie Eingriffen, Henkeln und Auslässen. Außerdem kann das Klebeband als konstruktives Element verwendet werden, um zum Beispiel das Ausbeulen schwererer Verpackungen zu verhindern.

Hieraus ergeben sich Vorteile wie
- das Aufwerten von Verpackungen für höhere Beanspruchungen,
- die Reduktion des Gesamtmaterialeinsatzes durch gezielte Verstärkung der Hauptbelastungszonen und
- die Erhöhung der Verwendungsdauer einer Verpackung

Im Gegensatz zu den bekannten Lösungen erfordert die vorliegende Erfindung keine verstärkenden Filamente.

Die hier vorliegende Erfindung basiert auf der Beobachtung, dass ein seitlicher Einriss in einem Folienträgermaterial nicht nur durch einen durchgeschlitzten, sondern auch schon durch einen nur in der entsprechenden Tiefe angeritzten Schlitz in Längsrichtung aufgehalten und umgelenkt wird, so dass der verbleibende Teil des Trägermaterials, den Zug aufnehmen und in plastische Verformung umsetzen kann. Der oder die verbleibenden Streifen werden gedehnt. Gerade steife, dünne Folien wie MOPP oder PET reagieren unter Zugspannung sofort mit Durchreißen, sobald die Seitenkante verletzt wird. Dabei können schon ein unsauberer Schnitt oder einfach nur ein Kratzer eine solche Verletzung darstellen, die zu einem totalen Versagen des Klebebands unter Zugbelastung führt.

Durch das Anritzen des Trägermaterialen können aber nun auf Grund der oben genannten Beobachtung in frei wählbaren Abständen Rissstops eingefügt werden, die bei Seitenkantenverletzung ein vollständiges Durchreißen und damit Versagen verhindern.
In dem Trägermaterial sind vorzugsweise mehrere Anritzungen oder Schlitze parallel nebeneinander angeordnet. Bei Verletzung im Randbereich stoppt der Riss unmittelbar an der Ritzung, also in unmittelbarer Nähe des ursprünglichen Endes des Risses (die Verletzungstiefe entspricht der endgültigen Einreißtiefe).
Die Erfindung zeigt, dass ein Klebeband mit einer längsgeritzten Folie die Vorteile der erhöhten Quer-Reißfestigkeit bietet und gleichzeitig die Vorteile der Folienklebebänder aufweist, nämlich flache und ebene Struktur und geringe Dichte bei hoher Zugfestigkeit.

Weitere Vorteile dieser Erfindung liegen unter anderem darin, dass Folien verwendet werden. Dies führt im Gegensatz zu zum Beispiel Filament verstärkten Klebebändern zu sehr flachen Aufbauten von 100 µm und weniger bei ähnlicher Leistung. Des Weiteren entstehen keinerlei Hohlräume wie bei Geweben und Gelegen, die durch Klebmasse aufgefüllt werden müssen. Dies führt zu einer prägnanten Klebmasseersparnis.

Anhand der nachfolgend beschriebenen Figuren wird die Erfindung näher erläutert, ohne damit diese unnötig einschränken zu wollen.

Es zeigen
- Figur 1: das Klebeband mit Blick auf die Folie, wobei die Ritze durchgängig ausgeführt sind,
- Figur 2: das Klebeband nach Figur 1a im Schnitt quer zur Längsrichtung des Klebebands,
- Figur 3: das Ritzverfahren zur Herstellung des Klebebands und
- Figur 4: die erforderlichen Anlagenteile zur Durchführung des Ritzverfahrens.

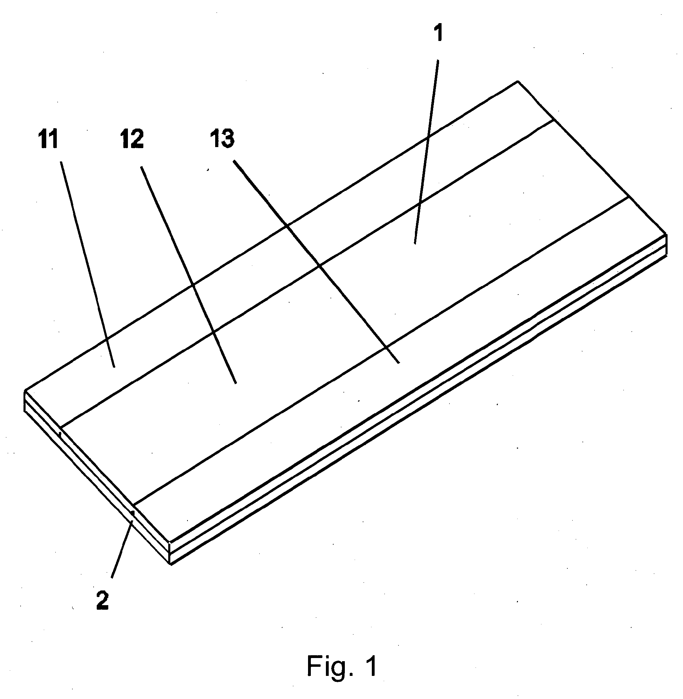

Gemäß Figur 1 weist das Klebeband als Trägermaterial eine Folie 1 auf, in die zwei Randstreifen 11, 13 sowie einen daraus resultierenden Mittelstreifen 12 geritzt sind. Die Breite der Randstreifen 11, 13 beträgt ein Drittel der gesamten Klebebandbreite.
Auf die Folie 1 ist eine Klebemasse 2 aufgetragen. Die Ritze sind dabei als durchgängige Linie ausgeführt.

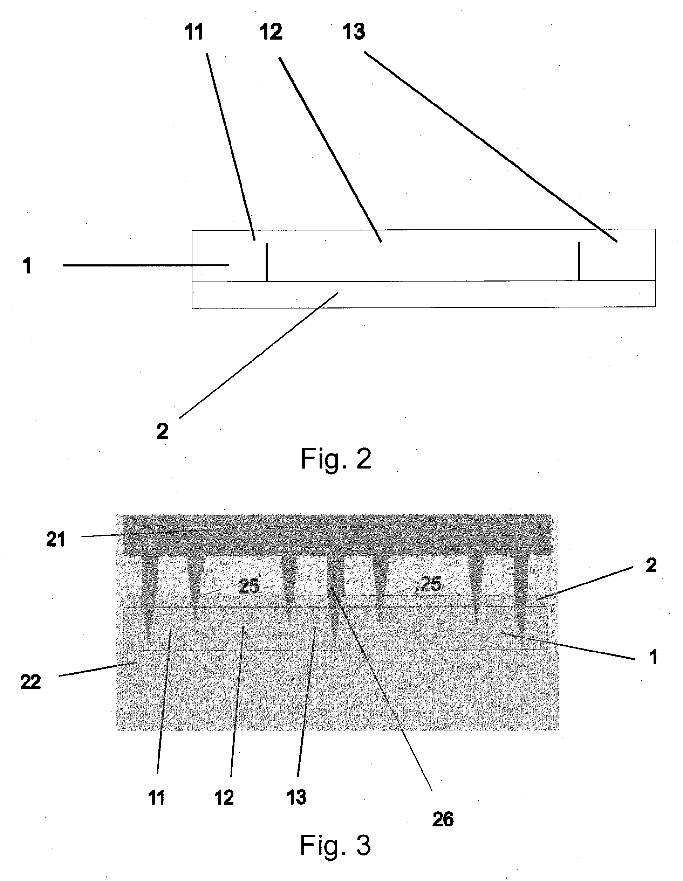

Figur 2 zeigt das Klebeband nach Figur 1 im Schnitt quer zur Längsrichtung des Klebebands. Die die Streifen 11, 12, 13 bildenden Ritze erstrecken sich nicht über die gesamte Dicke der Folie 1. Die Ritze beginnen auf der Oberfläche der Folie 1, auf die die Klebemasse 2 aufgetragen ist, so dass die freiliegende Oberfläche des Trägermaterials unbeschädigt ist.

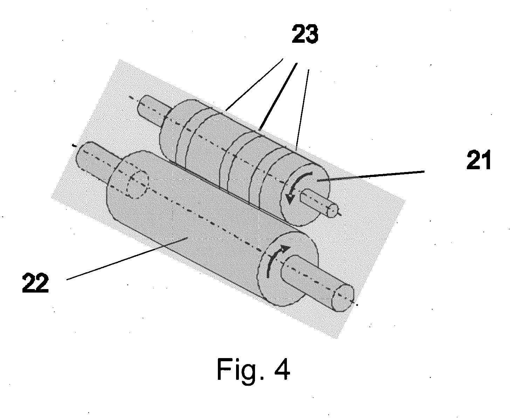

In der Figur 3 ist das Ritzverfahren zur Herstellung des Klebebands gezeigt. Das Klebeband besteht aus den zwei Schichten Folie 1 und Klebemasse 2 und wird zwischen einen Rotationsstanzwelle 21 und einen Gegentanzzylinder 22 geführt.
Durch umlaufende Schneidlinien 23 (siehe Figur 4) wird zum einen gewährleistet, dass die Folie 1 geritzt wird, indem die Folie 1 lediglich angestanzt wird (25), gleichzeitig das Klebeband auf Breite geschnitten, indem die Folie 1 und die Klebemasse 2 durchgestanzt werden (26).

Figur 4 zeigt nochmals das Zusammenspiel von Rotationsstanzwelle 21 und Gegenstanzzylinder 22.

## Patentansprüche

1. Verwendung eines Klebebands mit einem Trägermaterial, auf das zumindest einseitig eine
Klebemasse aufgebracht ist, wobei
das Trägermaterial aus einer Folie besteht,
die Folie mindestens einen sich in der Längsrichtung des Klebebands erstreckenden Ritz aufweist,
der Ritz auf der Oberfläche des Trägermaterials beginnt, auf die die Klebemasse aufgetragen ist, so dass die freiliegende Oberfläche des Trägermaterials unbeschädigt ist,
als Verstärkungsband auf Papier, Well- oder Vollpappe, vorzugsweise an exponierten Stellen wie Eingriffen, Henkeln und Auslässen.

2. Verwendung nach Anspruch 1, **dadurch gekennzeichnet, dass**
der Ritz sich über zumindest ein Fünftel der gesamten Dicke des Trägermaterials erstreckt.

3. Verwendung nach Anspruch 1 oder 2, **dadurch gekennzeichnet, dass**
der Ritz als durchgängige oder als unterbrochene Linie, letztere bevorzugt in regelmäßigen Abständen unterbrochen, ausgeführt ist.

4. Verwendung nach zumindest einem der Ansprüche 1 bis 3, **dadurch gekennzeichnet, dass**
das Trägermaterial zwei Ritze aufweist, von denen jeweils einer nahe an einer der beiden Seitenkanten des Trägermaterials angeordnet ist.

5. Verwendung nach zumindest einem der vorherigen Ansprüche, **dadurch gekennzeichnet, dass**
die Folie aus BOPP, MOPP, PP, PE, PET, PA, PU, PVC oder Polyester besteht.

6. Verwendung nach zumindest einem der vorherigen Ansprüche, **dadurch gekennzeichnet, dass**
die Folie aus Polyester, PET, MOPP, H-PVC besteht.

7. Verwendung nach zumindest einem der vorherigen Ansprüche, **dadurch gekennzeichnet, dass**
es sich bei der Klebemasse um eine Haftklebemasse handelt.

8. Verwendung nach zumindest einem der vorherigen Ansprüche, **dadurch gekennzeichnet,**
**dass**
der Auftrag an Klebemasse auf das Trägermaterial zwischen 15 bis 60 g/m², vorzugsweise zwischen 20 bis 30 g/m² beträgt.

9. Verwendung nach zumindest einem der vorherigen Ansprüche, **dadurch gekennzeichnet, dass**
die Festigkeit des Trägermaterials mindestens 250 N/mm² bei 60 µm Dicke, insbesondere 300 N/mm² beträgt.

10. Verwendung nach zumindest einem der Ansprüche 1 bis 8, **dadurch gekennzeichnet, dass**
die Folie eine Dicke von 5 bis 50 µm aufweist.

11. Verwendung eines Klebebands nach zumindest einem der vorherigen Ansprüche zum Bündeln, Verpacken, Palettisieren.

## Claims

1. Use of an adhesive tape having a backing material applied to at least one side of which is an adhesive, the backing material being composed of a film, the film having at least one score extending in the machine direction of the adhesive tape, the score beginning on the surface of the backing material to which the adhesive has been applied, so that the exposed surface of the backing material is undamaged, as reinforcing tape on paper, corrugated board or solid board, preferably at exposed positions such as grips, handles and cutouts.

2. Use according to Claim 1, **characterized in that** the score extends over at least one fifth of the total thickness of the backing material.

3. Use according to Claim 1 or 2, **characterized in that** the score is made as a continuous or as a broken line, the latter broken preferably at regular intervals.

4. Use according to at least one of the Claims 1 to 3, **characterized in that** the backing material has two scores, of which one in each case is disposed close to one of the two side edges of the backing material.

5. Use according to at least one of the preceding claims, **characterized in that** the film is composed of BOPP, MOPP, PP, PE, PET, PA, PU, PVC or polyester.

6. Use according to at least one of the preceding claims, **characterized in that** the film is composed of polyester, PET, MOPP or U-PVC.

7. Use according to at least one of the preceding claims, **characterized in that** the adhesive is a pressure-sensitive adhesive.

8. Use according to at least one of the preceding claims, **characterized in that** the application of adhesive to the backing material amounts to between 15 to 60 g/m², preferably between 20 to 30 g/m².

9. Use according to at least one of the preceding claims, **characterized in that** the strength of the backing material is at least 250 N/mm² for 60 µm thickness, in particular 300 N/mm².

10. Use according to at least one of Claims 1 to 8, **characterized in that** the film has a thickness of 5 to 50 µm.

11. Use of an adhesive tape according to at least one of the preceding claims for bundling, packing or palletizing.

## Revendications

1. Utilisation d'un ruban adhésif présentant un matériau support sur lequel est appliquée, sur au moins un côté, une masse adhésive, le matériau support étant constitué par une feuille, la feuille présentant au moins une rayure s'étendant dans la direction longitudinale du ruban adhésif, la rayure commençant au niveau de la surface du matériau support sur laquelle la masse adhésive est appliquée, de telle sorte que la surface libre du matériau support n'est pas abîmée, comme ruban de renforcement sur du papier, du carton ondulé ou du carton compact, de préférence en des sites exposés, tels que des prises, des anses et des orifices de sortie.

2. Utilisation selon la revendication 1, **caractérisée en ce que** la rayure s'étend sur au moins un cinquième de l'épaisseur totale du matériau support.

3. Utilisation selon la revendication 1 ou 2, **caractérisée en ce que** la rayure est réalisée sous forme de ligne continue ou interrompue, cette dernière étant de préférence interrompue à des distances régulières.

4. Utilisation selon au moins l'une quelconque des revendications 1 à 3, **caractérisée en ce que** le matériau support présente deux rayures, dont à chaque fois une est agencée à proximité d'un des deux bords latéraux du matériau support.

5. Utilisation selon au moins l'une quelconque des revendications précédentes, **caractérisée en ce que** la feuille est en BOPP, MOPP, PP, PE, PET, PA, PU, PVC ou en polyester.

6. Utilisation selon au moins l'une quelconque des revendications précédentes, **caractérisée en ce que** la feuille est en polyester, en PET, en MOPP, en H-PVC.

7. Utilisation selon au moins l'une quelconque des revendications précédentes, **caractérisée en ce qu'**il s'agit, pour la masse adhésive, d'une masse autoadhésive.

8. Utilisation selon au moins l'une quelconque des revendications précédentes, **caractérisée en ce que** l'application de la masse adhésive sur le matériau support est située entre 15 à 60 g/m², de préférence entre 20 à 30 g/m².

9. Utilisation selon au moins l'une quelconque des revendications précédentes, **caractérisée en ce que** la résistance du matériau support est d'au moins 250 N/mm² à une épaisseur de 60 µm, en particulier de 300 N/mm².

10. Utilisation selon au moins l'une quelconque des revendications 1 à 8, **caractérisée en ce que** la feuille présente une épaisseur de 5 à 50 µm.

11. Utilisation d'une bande adhésive selon au moins l'une quelconque des revendications pour l'empaquetage, l'emballage, la palettisation.
